# EUROPÄISCHE PATENTSCHRIFT

(11) **EP 3 508 766 B1**
(45) Veröffentlichungstag und Bekanntmachung des Hinweises auf die Patenterteilung: **16.12.2020**
(21) Anmeldenummer: 19150005.7
(22) Anmeldetag: 02.01.2019
(51) Int. Cl.: F16K 31/524, F16K 31/56, F16K 31/60, E03C 1/23

(54) **SCHALTVORRICHTUNG UND SANITÄRES ABSPERRVENTIL**
SWITCHING DEVICE AND SANITARY STOP VALVE
DISPOSITIF DE COMMUTATION ET VANNE D'ARRÊT SANITAIRE

(30) Priorität: 04.01.2018 DE 102018200086
(43) Veröffentlichungstag der Anmeldung: 10.07.2019
(73) Patentinhaber: Hansgrohe SE, 77761 Schiltach (DE)
(72) Erfinder: Werner, Bernd, 78727 Oberndorf-Beffendorf (DE); Wild, Jochen, 78628 Rottweil (DE)
(74) Vertreter: Patentanwälte Ruff, Wilhelm, Beier, Dauster & Partner mbB

(56) Entgegenhaltungen:
- CN-A- 102 135 208
- DE-U- 7 023 116
- GB-A- 1 197 487
- JP-A- S5 857 578
- JP-A- 2014 008 980
- US-A- 4 076 209

## Beschreibung

Die Erfindung bezieht sich auf ein sanitäres Absperr- oder Umstellventil mit einem Ventilgehäusekörper, einem daran axialbeweglich angeordneten Ventilbetätigungsglied und einer Schaltvorrichtung.

In entsprechenden Ausführungen solcher Sanitärventile wird eine Schaltvorrichtung benutzt mit einem Schaltgehäusekörper, einem Schaltglied, das am Schaltgehäusekörper in einer Schaltrichtung von einer Ausgangsposition in eine Schaltposition translationsbeweglich gehalten ist, einem Rückstellelement, welches auf das Schaltglied in der Schaltposition eine Rückstellkraft in Richtung der Ausgangsposition ausübt, und einem Bedienelement als Nutzerschnittstelle, das am Schaltgehäusekörper gehalten ist.

Schaltvorrichtungen dieser Art finden beispielsweise in Sanitärarmaturen zum Schalten von dort installierten Absperrventilen in verschiedenen Ausführungen Verwendung. Bei einem bekannten Typ solcher Schaltvorrichtungen wird ein Drehknopf bzw. allgemein ein drehbewegliches Bedienelement als Nutzerschnittstelle verwendet, wie beispielsweise bei dem in der Offenlegungsschrift DE 42 17 006 A1 offenbarten Absperrventil.

Es wurden auch bereits Schaltvorrichtungen für sanitäre Absperr- und/oder Umstellventile vorgeschlagen, bei denen als Bedienelement ein Druckknopf bzw. eine Drucktaste fungiert, wie bei dem in der Patentschrift DE 10 2009 008 194 B4 offenbarten sanitären Abschalt- und/oder Umschaltventil. In der Patentschrift DE 10 2014 202 474 B3 ist ein sanitärer Brausekopf mit einem Ventil offenbart, das über ein dreh- und/oder axialbeweglich am Brausekopfgehäuse angeordnetes Bedienelement vom Benutzer geschaltet werden kann.

Des Weiteren wurden bereits verschiedentlich Schaltvorrichtungen für sanitäre Absperr- und/oder Umstellventile und andere Ventiltypen vorgeschlagen, bei denen als Bedienelement ein Bedienstift fungiert, der am Schaltgehäusekörper in einer zur Schaltrichtung des Schaltglieds parallelen Kippebene zwischen zwei Endpositionen kippbeweglich gehalten ist, wobei als Rückstellelement eine Schraubenfeder dient, siehe beispielsweise die Offenlegungsschriften JP S58-57578 A und JP 2014-008980 A, die Gebrauchsmusterschrift DE 70 23 116 U und die Patentschriften US 4 076 209 und GB 1 197 487. Diese Dokumente offenbaren diverse Absperr- und Umstellventile teils für sanitäre, teils für nicht sanitäre Anwendungen mit einem Ventilgehäusekörper, einem am Ventilgehäusekörper axialbeweglich angeordneten Ventilbetätigungsglied und einer Schaltvorrichtung, wobei die Schaltvorrichtung folgendes umfasst: einen Schaltgehäusekörper, ein auf das Ventilbetätigungsglied wirkendes Schaltglied, das translationsbeweglich am Schaltgehäusekörper gehalten ist, eine Vorspannfederanordnung, die für das Schaltglied ein Rückstellelement bereitstellt, welches auf das Schaltglied eine federelastische Rückstellkraft ausübt, einen Bedienstift als Nutzerschnittstelle, der am Schaltgehäusekörper in einer zur Schaltrichtung des Schaltglieds parallele Kippebene zwischen zwei Endpositionen kippbeweglich gehalten ist, und eine Übertragungseinheit zwischen dem Schaltglied und dem Bedienstift, wobei bei einem Teil dieser Ventile die Übertragungseinheit eine Kulissenführung aufweist, welche die Kippbewegung des Bedienstifts in die Translationsbewegung des Schaltglieds umsetzt, wobei die Schaltposition des Schaltglieds mit einer Zwischenposition des Bedienstifts zwischen seinen beiden Endpositionen korrespondiert.

Die Offenlegungsschrift CN 102135208 A offenbart ein sanitäres Absperrventil, das als Ein/Aus-Ventil zwischen einer Offenstellung und einer Schließstellung umschaltbar ist und einen Ventilgehäusekörper und einen am Ventilgehäusekörper über eine Tellerfeder federelastisch axialbeweglich gehaltenen Ventilschließkörper aufweist. Der Ventilschließkörper besitzt eine Kugelkalottenform und wirkt an seiner Kugeloberfläche mit einem schwenkbeweglich gehaltenen Schaltglied einer zugehörigen Schaltvorrichtung zusammen. Das Schaltglied wird über einen kippbeweglichen Bedienstift betätigt, der als Nutzerschnittstelle fungiert.

Der Erfindung liegt als technisches Problem die Bereitstellung eines sanitären Absperr- oder Umstellventils der eingangs genannten Art mit einer Schaltvorrichtung zugrunde, die gegenüber dem oben genannten Stand der Technik eine alternative Schaltfunktionalität besitzt und sich mit relativ geringem Aufwand fertigen lässt.

Die Erfindung löst dieses Problem durch die Bereitstellung eines sanitären Absperr- oder Umstellventils mit den Merkmalen des Anspruchs 1.

Beim erfindungsgemäßen Absperr- oder Umstellventil umfasst die Schaltvorrichtung einen Schaltgehäusekörper, ein an diesem in einer Schaltrichtung von einer Ausgangsposition in eine Schaltposition translationsbeweglich gehaltenes Schaltglied, ein Rückstellelement, das auf das Schaltglied in der Schaltposition eine Rückstellkraft in Richtung der Ausgangsposition ausübt, einen Bedienstift, der als Nutzerschnittstelle am Schaltgehäusekörper in einer zur Schaltrichtung des Schaltglieds parallelen Kippebene zwischen zwei Endpositionen kippbeweglich gehalten ist, und eine Übertragungseinheit zwischen dem Schaltglied und dem Bedienstift, wobei die Übertragungseinheit eine Kulissenführung aufweist, welche die Kippbewegung des Bedienstifts in die Translationsbewegung des Schaltglieds umsetzt. Dabei korrespondiert die Schaltposition des Schaltglieds mit einer Zwischenposition des Bedienstifts zwischen seinen Endpositionen.

Weiter umfasst die Schaltvorrichtung eine Federhalterung, die das Schaltglied federelastisch translationsbeweglich am Schaltgehäusekörper hält. Die Federhalterung stellt hierbei gleichzeitig das Rückstellelement bereit, das dann auf das Schaltglied eine entsprechend federelastische Rückstellkraft in Richtung seiner Ausgangsposition ausübt. Dazu ist die Federhalterung von einem Federstreifen gebildet, der mit seinen beiden Enden am Schaltgehäusekörper fixiert ist und in einem mittleren Bereich das Schaltglied trägt.

Die derart konfigurierte Schaltvorrichtung besitzt eine vorteilhafte Schaltfunktionalität und lässt sich mit relativ geringem Aufwand realisieren. Der Bedienstift fungiert quasi als ein Kippschalter bzw. Wippschalter, während andererseits das Schaltglied eine translatorische Bewegung, d.h. eine Verschiebebewegung, ausführt. Das Schaltglied dient hierbei als Aktorschnittstelle, d.h. als Schnittstelle zu der von der Schaltvorrichtung zu schaltenden Einrichtung, wie z.B. zu einem sanitären Absperrventil bzw. konkreter zu einem Ventilbetätigungsglied eines sanitären Absperrventils. Die Übertragungseinheit sorgt für die nötige Umsetzung der Kippbewegung des Bedienstifts in die Translationsbewegung des Schaltglieds.

Indem sich der Bedienstift in einer Zwischenposition zwischen seinen beiden Endpositionen befindet, wenn sich das Schaltglied in seiner Schaltposition befindet, können die beiden Endpositionen des Bedienstifts jeweils mit einer einzigen Ausgangsposition des Schaltglieds korrespondieren oder mit zwei unterschiedlichen Ausgangspositionen des Schaltglieds, je nachdem, wie das Schaltglied diesbezüglich konfiguriert ist.

Das erfindungsgemäße sanitäre Absperr- oder Umstellventil lässt sich mit dieser erfindungsgemäßen Schaltvorrichtung vom Benutzer durch eine Kipp- bzw. Wippbetätigung des Bedienstifts schalten. Die Kipp- bzw. Schwenk- oder Wippbewegung des Bedienstifts bewirkt die Translationsbewegung des Schaltglieds von seiner Ausgangsposition in seine Schaltposition, wodurch das Ventilbetätigungsglied in seine ventilumschaltende Axialbewegung versetzt wird. Somit lässt sich erfindungsgemäß beispielsweise ein mittels einer axialen Druckkraft umzuschaltendes Absperr- oder Umstellventil durch eine vom Benutzer bewirkte Kipp- bzw. Wippschalterbewegung betätigen.

In einer Weiterbildung der Erfindung umfasst die Kulissenführung eine mit dem Bedienstift bewegungsgekoppelte erste Kulissennockenfläche und eine mit dem Schaltglied bewegungsgekoppelte zweite Kulissennockenfläche. Die zweite Kulissennockenfläche wirkt mit der ersten Kulissennockenfläche über eine Schrägflächenkopplung zusammen, wodurch die gewünschte Umsetzung der Kippbewegung des Bedienstifts in die Translationsbewegung des Schaltglieds erzielt werden kann.

In Ausgestaltung der Erfindung umfasst die Kulissenführung zwei erste Kulissennockenflächen und zwei zweite Kulissennockenflächen, wobei jeweils eine zweite Kulissennockenfläche mit einer ersten Kulissennockenfläche zusammenwirkt. Die beiden ersten und die beiden zweiten Kulissennockenflächen sind jeweils in einer zur Kippebene senkrechten Richtung voneinander beabstandet angeordnet. Bei dieser Realisierung der Kulissenführung wirken mindestens zwei Paare von Kulissennocken-Schrägflächen an bezüglich der Kippebene beabstandeten Stellen miteinander zusammen, was zu einer hohen mechanischen Stabilität und einem sehr funktionssicheren Schaltverhalten der Schaltvorrichtung beitragen kann. Die beiden ersten bzw. zweiten Kulissennockenflächen können jeweils von nur einem oder von zwei beabstandeten Kulissennocken bereitgestellt sein.

In einer Weiterbildung der Erfindung weist die Schaltvorrichtung eine Bedienstiftführung auf, die den Bedienstift kippbeweglich am Schaltgehäusekörper führt. Die Bedienstiftführung beinhaltet eine in der Kippebene kreisbogenförmige Führungsfläche an einem mit dem Bedienstift bewegungsgekoppelten Schaltführungskörper und eine zu dieser korrespondierend kreisbogenförmige Führungsgegenfläche am Schaltgehäusekörper. Die Führungsfläche und die Führungsgegenfläche bilden folglich zusammenwirkende Kulissenführungsflächen, die in der Kippebene als Schnittebene kreisbogenförmig verlaufen. Dies stellt eine vorteilhafte Kulissenführungshalterung des kippbeweglichen Bedienstifts am Schaltgehäusekörper dar. Beispielsweise sind damit bei Bedarf vergleichsweise große Kippbewegungsradien für den Bedienstift bei gleichzeitig kompaktem Aufbau der Schaltvorrichtung erzielbar, da der Bedienstift nicht auf einer zugehörigen Kippachse gelagert sein braucht. Die Führungsfläche und die Führungsgegenfläche können z.B. durch entsprechende Zylinderflächenabschnitte oder Kugelflächenabschnitte gebildet sein. Dies kann herstelltechnisch und/oder hinsichtlich etwaiger Abdichtungsmaßnahmen vorteilhaft sein.

In Ausgestaltung der Erfindung erstreckt sich die kreisbogenförmige Führungsfläche am Schaltführungskörper in der Kippebene über einen Bogenwinkel im Bereich zwischen 30° und 70°. Dies stellt für entsprechende Anwendungen einen vorteilhaften Kompromiss zwischen einem entsprechend langen Schaltweg für den Bedienstift und einem kompakten Aufbau der Schaltvorrichtung dar.

In einer Weiterbildung der Erfindung schließt eine Längsachse des Bedienstifts in allen Stellungen des Bedienstifts zwischen seinen beiden Endpositionen einen Winkel von höchstens 45° mit der Schaltrichtung des Schaltglieds ein. Dies stellt eine vorteilhafte Ausführung und Anordnung des Bedienstifts relativ zur Schaltrichtung des Schaltglieds dar.

In einer Weiterbildung der Erfindung weist der Schaltgehäusekörper eine plattenförmige Bedienseite mit einer Aussparung auf, aus der sich der Bedienstift in allen seinen Stellungen zwischen seinen beiden Endpositionen mit einer Längsachse heraus erstreckt, die einen Winkel von mindestens 45° mit einer Plattenebene der Bedienseite einschließt. Diese Konfiguration kann unter funktionellen und ästhetischen Gesichtspunkten vorteilhaft sein und unterstützt eine bequeme Bedienbarkeit der Schaltvorrichtung durch den Benutzer.

Das erfindungsgemäße Absperr- oder Umstellventil lässt sich sehr vorteilhaft mit Hilfe der erfindungsgemäßen Schaltvorrichtung schalten. Beispielsweise kann das Ventil ein Absperrventil sein, dass als Ein/Aus-Ventil zwischen einer Offenstellung und einer Schließstellung umschaltbar ist und bei dem das Ventilbetätigungsglied für einen jeweiligen Schaltvorgang axial vorbewegt oder zurückbewegt wird und sich nach Loslassen wieder in eine Ausgangsposition zurückbewegt, wobei je nach Systemauslegung des Ventils die Ausgangsposition für die Offenstellung und die Schließstellung des Ventils identisch sein kann oder zwei unterschiedliche Ausgangspositionen auf verschiedener axialer Höhe vorgesehen sein können.

So kann das Absperrventil beispielsweise, wenn es sich in seiner Schließstellung befindet, vom Benutzer durch Kippbetätigung des Bedienstifts von seiner einen zu seiner anderen Endposition in seine Offenstellung umgeschaltet werden, indem das Schaltglied durch seine Bewegung von der Ausgangsposition in die Schaltposition das Ventilbetätigungsglied entsprechend axial bewegt und sich danach selbsttätig mittels Unterstützung durch das Rückstellelement in die gleiche oder eine andere Ausgangsposition zurückbewegt. Durch inverse Kippbetätigung des Bedienstifts kann der Nutzer danach das Ventil wieder von seiner Offenstellung in seine Schließstellung umschalten, wobei wiederum das Schaltglied aus einer Ausgangsposition in die Schaltposition bewegt wird und das Ventilbetätigungsglied entsprechend axial bewegt, um anschließend wieder selbsttätig in seine eine oder einzige Ausgangsposition zurückzukehren.

Vorteilhafte Ausführungsformen der Erfindung sind in den Zeichnungen dargestellt und werden nachfolgend beschrieben. Hierbei zeigen:
- Fig. 1: eine Perspektivansicht eines sanitären Absperrventils mit einer z.B. für dieses Ventil verwendbaren Schaltvorrichtung,
- Fig. 2: eine perspektivische Draufsicht von oben auf die Schaltvorrichtung,
- Fig. 3: eine perspektivische Draufsicht von unten auf die Schaltvorrichtung,
- Fig. 4: eine Draufsicht von oben auf die Schaltvorrichtung in einer ersten Kippendpositon,
- Fig. 5: eine Seitenansicht der Schaltvorrichtung in der ersten Kippendposition,
- Fig. 6: eine Schnittansicht längs einer Linie VI-VI in Fig. 4,
- Fig. 7: eine Schnittansicht längs einer Linie VII-VII in Fig. 4,
- Fig. 8: eine Schnittansicht längs einer Linie VIII-VIII in Fig. 4,
- Fig. 9: die Draufsicht von Fig. 4 in einer Schaltposition der Schaltvorrichtung,
- Fig. 10: die Seitenansicht von Fig. 5 in der Schaltposition,
- Fig. 11: die Schnittansicht von Fig. 7 in der Schaltposition,
- Fig. 12: die Draufsicht von Fig. 4 in einer zweiten Kippendposition der Schaltvorrichtung,
- Fig. 13: die Schnittansicht von Fig. 6 in der zweiten Kippendposition von Fig. 12 und
- Fig. 14: die Schnittansicht von Fig. 11 in der zweiten Kippendposition von Fig. 12.

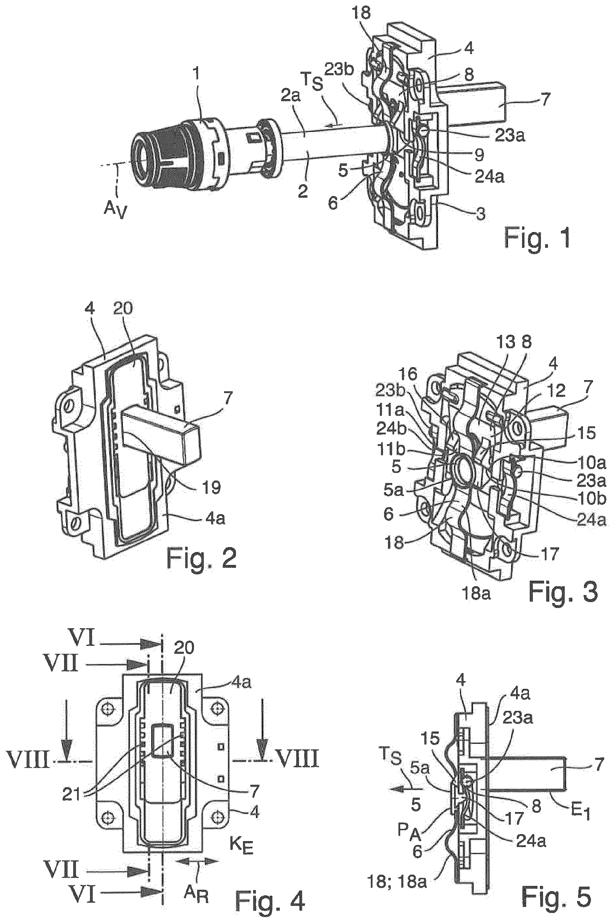

Das in Fig. 1 gezeigte sanitäre Absperrventil ist als Ein/Aus-Ventil konfiguriert und dementsprechend zwischen einer Offenstellung und einer Schließstellung umschaltbar. Es umfasst einen Ventilgehäusekörper 1, ein am Ventilgehäusekörper 1 axialbeweglich angeordnetes Ventilbetätigungsglied 2 und eine Schaltvorrichtung 3, welches auf das Ventilbetätigungsglied 2 wirkt.

Der Ventilgehäusekörper 1 ist im gezeigten Beispiel als Ventilkartusche einer an sich bekannten, von der Anmelderin vertriebenen Bauart, so dass selbiger einschließlich der in ihm verbauten Komponenten und die Funktionsweise des Ventils hier keiner näheren Erläuterung bedürfen, soweit darauf nicht im Folgenden eingegangen wird. Das Ventilbetätigungsglied 2 ist in diesem Beispiel durch einen Ventilbetätigungsstift 2a realisiert, der sich an einer Stirnseite der im Wesentlichen zylindrischen Ventilkartusche längs einer Axialrichtung A_{V} derselben aus dieser heraus erstreckt. Wenn das Absperrventil geschlossen ist, befindet sich der Ventilbetätigungsstift 2a in einer herausbewegten Ausgangsposition. Aus dieser kann er mittels axialem Bediendruck in eine Einschaltposition axial in Richtung in die Ventilkartusche hinein vorbewegt werden, wodurch das Ventil öffnet. Nach Lösen des Betätigungsdrucks auf den Ventilbetätigungsstift 2a gelangt dieser axial in die gleiche oder eine andere, zweite Ausgangsposition zurück, die beispielsweise eine noch weiter als die erste Ausgangsposition im Schließzustand des Ventils herausbewegte Ausgangsposition sein kann, welche der Ventilbetätigungsstift 2a in der Öffnungsstellung des Ventils einnimmt. Das Ventil bleibt in seiner Öffnungsstellung, bis der Ventilbetätigungsstift 2a erneut axial vorgedrückt und wieder losgelassen wird, wodurch dann mittels dieses nächsten Schaltvorgangs das Ventil wieder geschlossen wird.

Die Schaltvorrichtung 3 umfasst einen Schaltgehäusekörper 4, ein Schaltglied 5, ein Rückstellelement 6, einen Bedienstift 7 und eine Übertragungseinheit 8 und ist in den Fig. 2 bis 14 in einer beispielhaften Ausführungsvariante in verschiedenen Ansichten und Funktionsstellungen näher veranschaulicht. Sie kann zum Schalten des Ventils von Fig. 1 oder alternativ zum Schalten eines anderen sanitären oder nicht-sanitären Absperrventils oder eines beliebigen anderen zu schaltenden Gegenstands verwendet werden, der die von der Schaltvorrichtung bereitgestellte Schaltfunktionalität benötigt.

Das Schaltglied 5 ist am Schaltgehäusekörper 4 in einer Schaltrichtung T_{S} von einer Ausgangsposition P_{A} in eine Schaltposition P_{S} translationsbeweglich gehalten. Das Rückstellelement 6 übt auf das Schaltglied 5 in seiner Schaltposition P_{S} eine Rückstellkraft F_{R} in Richtung der Ausgangsposition P_{A} aus. Der Bedienstift 7 fungiert als Nutzerschnittstelle, d.h. er wird von einem Benutzer betätigt, wenn dieser die Schaltvorrichtung aktivieren will, um z.B. ein sanitäres Absperrventil umzuschalten, wie dasjenige von Fig. 1. Der Bedienstift 7 ist am Schaltgehäusekörper 4 in einer zur Schaltrichtung T_{S} des Schaltglieds 5 parallelen Kippebene K_{E} zwischen zwei Endpositionen E1, E2 kippbeweglich gehalten, d.h. er kann eine Kippbewegung K_{B} in der Kippebene K_{E} ausführen. Dabei korrespondiert die Schaltposition P_{S} des Schaltglieds 5 mit einer Zwischenposition Z_{B} des Bedienstifts zwischen seinen beiden Endpositionen E1, E2, d.h. der Bedienstift 7 befindet sich, wenn das Schaltglied 5 seine Schaltposition P_{S} erreicht hat, nicht in einer seiner beiden Endpositionen E1, E2, sondern in der dazwischenliegenden Zwischenposition Z_{B}.

Die Übertragungseinheit 8 ist funktionell zwischen dem Schaltglied 5 und dem Bedienstift 7 angeordnet und weist eine Kulissenführung 9 auf, welche die Kippbewegung K_{B} des Bedienstifts 7 in die Translationsbewegung des Schaltglieds 5 in der Schaltrichtung T_{S} umsetzt.

In entsprechenden Ausführungen umfasst die Kulissenführung 9 wie im gezeigten Beispiel eine mit dem Bedienstift 7 bewegungsgekoppelte ersten Kulissennockenfläche 10a und eine mit dem Schaltglied 5 bewegungsgekoppelte zweite Kulissennockenfläche 10b, die mit der ersten Kulissennockenfläche 10a über eine Schrägflächenkopplung zusammenwirkt, d.h. die beiden Kulissennockenflächen 10a, 10b stellen mindestens teilweise schräg zu einer Hauptbewegungsrichtung verlaufende Kontaktflächen dar, die während der Schaltbewegung mit Berührkontakt gegeneinander anlaufen. In alternativen Ausführungen ist die Kulissenführung in einer andersartigen, herkömmlichen Weise ausgeführt, wie sie dem Fachmann zur Erfüllung der vorliegend vorgegebenen Funktionalität geläufig ist.

In entsprechenden Ausführungen umfasst die Kulissenführung wie im gezeigten Beispiel zwei erste Kulissennockenflächen 10a, 11a und zwei jeweils mit einer ersten Kulissennockenfläche 10a, 11a zusammenwirkende zweite Kulissennockenflächen 10b, 11b, wobei sowohl die ersten Kulissennockenflächen 10a, 11a als auch die zweiten Kulissennockenflächen 10b, 11b in einer zur Kippebene K_{E} senkrechten Richtung A_{R} voneinander beabstandet angeordnet sind. Dadurch ergeben sich zwei Paare von zusammenwirkenden, voneinander senkrecht zur Kippebene K_{E} beabstandeten Kulissennocken-Schrägflächen 10a, 10b bzw. 11a, 11b. Im gezeigten Beispiel sind die beiden ersten Kulissennockenflächen 10a, 11a von zwei beabstandeten Kulissennocken 15, 16 gebildet, während die beiden zweiten Kulissennockenflächen 10b, 11b von einer durchgehenden Schrägfläche eines einzigen zweiten Kulissennockens 17 gebildet sind, der sich durchgehend vom einen zum anderen ersten Kulissennocken 15, 16 erstreckt, so dass wiederum zwei Paare zusammenwirkender Kulissennocken-Schrägflächen vorliegen. In weiteren alternativen Ausführungen umfasst die Kulissenführung nur ein Paar oder mehr als zwei Paare zusammenwirkender Kulissennocken-Schrägflächen oder ein oder mehrere Paare zusammenwirkender Kulissennocken-Schrägflächen in Kombination mit anderen herkömmlichen Kulissenführungselementen.

Des Weiteren beinhaltet die Schaltvorrichtung 3 eine Bedienstiftführung 12, die den Bedienstift 7 kippbeweglich am Schaltgehäusekörper 4 führt. Dazu ist mit dem Bedienstift 7 ein Schaltführungskörper 13 bewegungsgekoppelt, der eine im Schnitt der Kippebene K_{E} kreisbogenförmige Führungsfläche 14a als Bestandteil der Bedienstiftführung 12 aufweist. Zusätzlich beinhaltet die Bedienstiftführung 12 eine Führungsgegenfläche 14b am Schaltgehäusekörper 4, die im Schnitt der Kippebene K_{E} korrespondierend kreisbogenförmig ist und mit der Führungsfläche 14a derart zusammenwirkt, dass damit die Kippbewegung K_{B} des Bedienstifts 7 geführt ist.

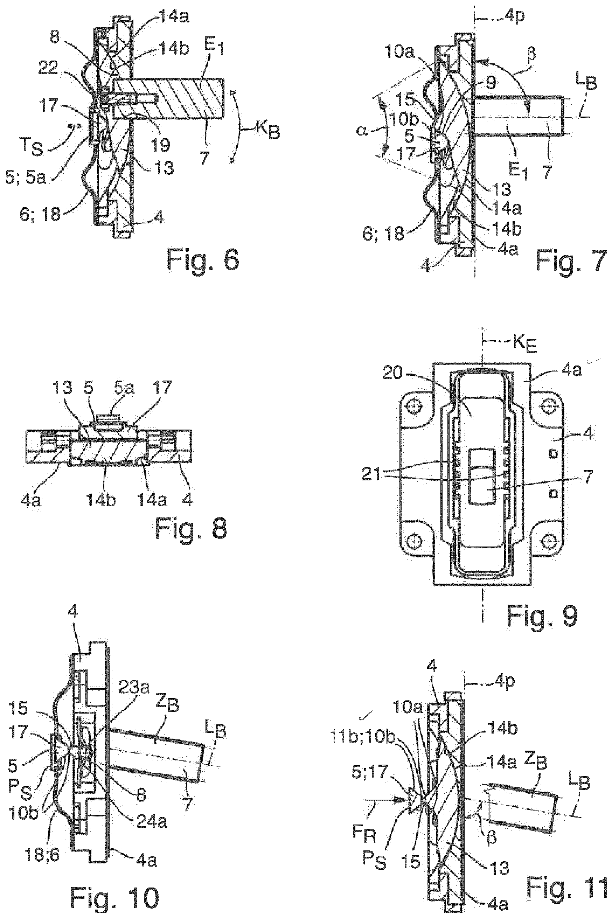

Fertigungstechnisch und hinsichtlich einfacher Abdichtbarkeit im Bedarfsfall kann vorgesehen sein, dass die Führungsfläche 14a und/oder die Führungsgegenfläche 14b von einem entsprechenden Zylindermantelflächenabschnitt oder wie im gezeigten Beispiel einem Kugelflächenabschnitt gebildet ist. In ersterem Fall verläuft die Führungsfläche bzw. Führungsgegenfläche dann in der zur Kippebene K_{E} senkrechten Schnittebene geradlinig, in letzterem Fall ebenfalls kreisbogenförmig, wie im gezeigten Ausführungsbeispiel realisiert und anhand von Fig. 8 ersichtlich.

In entsprechenden Ausführungsformen erstreckt sich die im Schnitt der Kippebene K_{E} kreisbogenförmige Führungsfläche 14a am Schaltführungskörper 13 über einen Bogenwinkel α im Bereich zwischen 30° und 70°. Dies begünstigt eine sichere Führung des Bedienstifts 7 mit relativ wenig erforderlichem Bauraum.

Durch ihre Kreisbogenform definieren die Führungsfläche 14a und die Führungsgegenfläche 14b die Kippbewegung K_{B} des Bedienstifts 7 um eine virtuelle Kippachse, ohne dass der Bedienstift 7 selbst an dieser Kippachse gelagert ist bzw. gelagert werden braucht. Dadurch lassen sich bei Bedarf relativ große Kippbewegungsradien realisieren, bei denen die Kippachse außerhalb der Abmessungen der Schaltvorrichtung 3 liegen kann.

Das Schaltglied 5 ist im gezeigten Ausführungsbeispiel mit einer Federhalterung 18 federelastisch translationsbeweglich am Schaltgehäusekörper 4 gehalten. In entsprechenden Ausführungen ist die Federhalterung 18 wie im gezeigten Beispiel von einem Federstreifen 18a gebildet, der mit seinen beiden Enden am Schaltgehäusekörper 4 fixiert ist und in einem mittleren Bereich das Schaltglied 5 trägt.

In entsprechenden Ausführungen schließt wie beim gezeigten Beispiel eine Längsachse L_{B} des Bedienstifts 7 in allen Stellungen des Bedienstifts 7 zwischen seinen beiden Endpositionen E₁, E₂ einen Winkel γ von höchstens 45° mit der Schaltrichtung T_{S} des Schaltglieds 5 ein. Im gezeigten Bespiel ist dieser Winkel γ gleich null, wenn sich der Bedienstift 7 in seiner ersten Endposition E₁ befindet, während er ca. 20° bis 30° beträgt, wenn sich der Bedienstift 7 in seiner anderen, zweiten Endposition E₂ befindet.

Im gezeigten Ausführungsbeispiel weist der Schaltgehäusekörper 4 eine plattenförmige Bedienseite 4a mit einer Aussparung 19 auf, aus der sich der Bedienstift 7 in allen seinen Stellungen zwischen seinen beiden Endpositionen E₁, E₂ dergestalt heraus erstreckt, dass seine Längsachse L_{B} einen Winkel β von mindestens 45° mit einer Plattenebene 4p dieser Bedienseite 4a einschließt. Im gezeigten Beispiel beträgt dieser Winkel β ca. 90°, wenn sich der Bedienstift 7 in seiner ersten Endposition E₁ befindet, während er ca. 60° bis 70° beträgt, wenn sich der Bedienstift 7 in seiner anderen, zweiten Endposition E₂ befindet.

Die genannten Bedienstift-/Schalterkonfigurationen ermöglichen designtechnisch günstige Ausführungen der Schaltvorrichtung 3 mit sehr guter und bequemer Bedienbarkeit bzw. Haptik des Bedienstifts 7. Die Aussparung 19 kann vorteilhaft wie im gezeigten Beispiel von einer Blende 20 abgedeckt sein, die mit einer Öffnung zur Durchführung des Bedienstifts 7 versehen ist und translationsbeweglich an der Bedienseite 4a des Schaltgehäusekörpers 4 gehalten ist, so dass sie dem entsprechenden Translationsbewegungsanteil der Kippbewegung K_{B} des Bedienstifts 7 folgen kann. Im gezeigten Beispiel ist die Blende 20 zudem über seitliche Rastverzahnungen 21 am Schaltgehäusekörper 4 geführt.

Im gezeigten Ausführungsbeispiel ist der Bedienstift 7 mittels einer Schraubverbindung 22 am Schaltführungskörper 13 gehalten. In alternativen Ausführungen ist er durch eine andere herkömmliche Verbindung am Schaltführungskörper 13 gehalten oder mit diesem einteilig ausgebildet.

Der Federstreifen 18a ist dergestalt geformt, dass er eine Federkraft entgegen der Schaltrichtung T_{S} des Schaltglieds 5 ausübt, welche die Rückstellkraft F_{R} für das Schaltglied 5 in Richtung seiner Ausgangsposition P_{A} bereitstellt, wenn sich das Schaltglied 5 in seiner Schaltposition P_{S} oder zwischen seiner Schaltposition P_{S} und seiner Ausgangsposition P_{A} befindet. Auf diese Weise stellt in diesem Ausführungsbeispiel die Federhalterung 18 gleichzeitig das Rückstellelement 6 bereit und hält das Schaltglied 5 translationsbeweglich am Schaltgehäusekörper 4 derart, dass sie das Schaltglied 5 elastisch in Richtung seiner Ausgangsposition P_{S} vorspannt. In alternativen Ausführungen sind das Rückstellelement und die Halterung für das Schaltglied am Schaltgehäusekörper in einer herkömmlichen Weise von separaten Bauteilen gebildet, z.B. von einer Kulissenführungshalterung einerseits und einer Rückstellfeder andererseits.

Zur Halterung des Bedienstifts 7 am Schaltgehäusekörper 4 weist im gezeigten Ausführungsbeispiel der Schaltführungskörper 13 zwei seitlich senkrecht zur Kippebene K_{E} abstehende Haltefortsätze 23a, 23b auf, die sich jeweils gegen einen zugeordneten Haltefederstreifen 24a, 24b anlegen, wobei die beiden Haltefederstreifen 24a, 24b jeweils endseitig am Schaltgehäusekörper 4 fixiert sind. Die Haltefederstreifen 24a, 24b drücken den Schaltführungskörper 13 über seine Fortsätze 23a, 23b mit seiner Führungsfläche 14a gegen die Führungsgegenfläche 14b am Schaltgehäusekörper 4 an. Dabei sind die Haltefederstreifen 24a, 24b bogenförmig so gestaltet, dass sie mit ihren Endbereichen stabile Haltepositionen für den Schaltführungskörper 13 und damit für den Bedienstift 7 definieren und mit einem vorgewölbten Mittenbereich rückstellende Kräfte auf den Schaltführungskörper 13 bzw. den Bedienstift 7 in Richtung einer der beiden stabilen Haltepositionen ausüben, wobei die Stelle maximaler Vorwölbung eine labile Halteposition für den Schaltführungskörper 13 bzw. den Bedienstift 7 definiert, die mit der Schaltposition P_{S} des Schaltglieds 5 korrespondiert.

Das Ventilbetätigungsglied 2 bewegt sich axial mit der Translationsbewegung des Schaltglieds 5 in Schaltrichtung TS mit. Dazu kann das Ventilbetätigungsglied 2 z.B. wie gezeigt in einer Ausnehmung 5a des Schaltglieds 5 aufgenommen oder alternativ in anderer Weise axial mit dem Schaltglied 5 bewegungsgekoppelt sein.

Damit ergibt sich für die gezeigte Schaltvorrichtung folgende Funktionsweise. In einer Ausgangsposition, in welcher das von der Schaltvorrichtung 3 angesteuerte Absperrventil z.B. geschlossen ist, befindet sich die Schaltvorrichtung 3 im Schaltzustand gemäß den Fig. 1 bis 8, in welcher sich der Bedienstift 7 in seiner ersten Endposition E₁ befindet. Die Blende 20 befindet sich in einer in Fig. 4 oberen Endstellung, und das Schaltglied 5 befindet sich in seiner Ausgangsposition P_{A}, in der es von der Federhalterung 18 vorgespannt gehalten ist und mit seinem Kulissennocken 17 neben den Kulissennocken 15, 16 am Schaltführungskörper 13 anliegt. Wenn der Benutzer nun den Bedienstift 7, der aufgrund seiner Funktion auch als Kipphebel, Schwenkhebel oder Wipphebel bezeichnet werden kann, entsprechend seiner Kippbewegung K_{B} in den Fig. 1 bis 7 nach unten betätigt bzw. drückt, setzt die Kippbewegung K_{B} des Bedienstifts 7 mittels der Bedienstiftführung 12 ein, wodurch die Kulissennocken 15, 16 am Schaltführungskörper 13 beginnen, durch die entsprechende Schrägflächenkopplung mit dem Schaltglied-Kulissennocken 17 das Schaltglied 5 aus seiner Ausgangsposition P_{A} heraus in seiner Schaltrichtung T_{S} entgegen der elastischen Rückstellkraft F_{R} der Federhalterung 18 zu bewegen, bis das Schaltglied 5 seine Schaltposition P_{S} erreicht hat.

Dieser Schaltzustand ist in den Fig. 9 bis 11 veranschaulicht. Das Schaltglied 5 liegt in seiner Schaltposition P_{S} mit seinem Kulissennocken 17 direkt den Kulissennocken 15, 16 unter jeweiligem Kontakt ihrer Nockenspitzen gegenüber, so dass dies die am weitesten vorbewegte Position des Schaltglieds 5 in den Fig. 10 und 11 nach links ist. Der Bedienstift 7 befindet sich mit dem Schaltführungskörper 13 in seiner Zwischenposition Z_{B}, die der labilen Zwischenposition der Halterung des Schaltführungskörpers 13 am Schaltgehäusekörper 4 über die Fortsätze 23a, 23b und die Haltefederstreifen 24a, 24b entspricht.

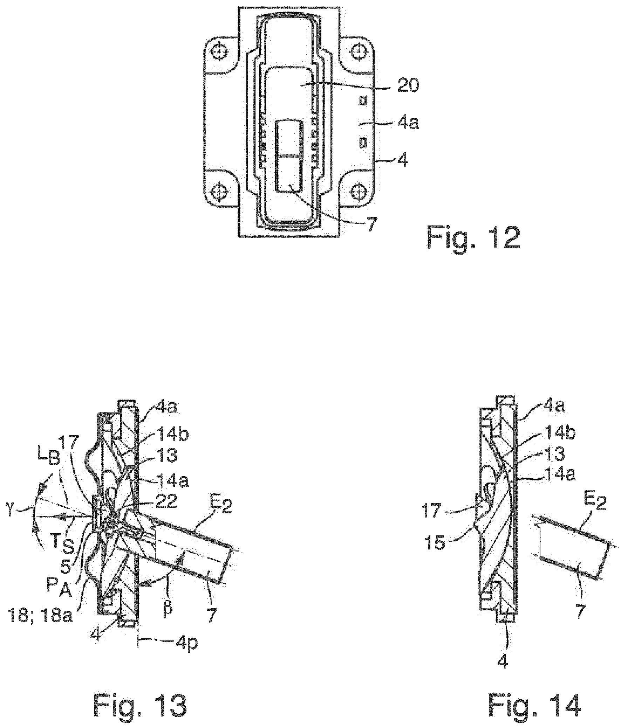

Sobald der Benutzer den Bedienstift 7 etwas über diese labile Zwischenposition Z_{B} hinaus weiterbewegt, gelangt der Bedienstift 7 in seine in den Fig. 12 bis 14 gezeigte zweite Endposition E₂, unterstützt durch die Federkraft der Haltefederstreifen 24a, 24b auf die Haltefortsätze 23a, 23b. Die Kulissennocken 15, 16 des Schaltführungskörpers 13 bewegen sich mit ihrer Nockenspitze an der Nockenspitze des Schaltglied-Kulissennockens 17 vorbei, wodurch das Schaltglied 5 mittels der Rückstellkraft F_{R} wieder in seine Ausgangsposition P_{A} reziprok zur Schaltrichtung T_{S} zurückgelangt. Im gezeigten Beispiel sind die Ausgangspositionen des Schaltglieds 5 in den beiden Endstellungen E₁ und E₂ des Bedienstifts 7 identisch, in alternativen Ausführungen sind sie axial parallel zur Schaltrichtung T_{S} versetzt.

Durch seine Bewegung von der Ausgangsposition P_{A} in die Schaltposition P_{S} und wieder zurück in die Ausgangsposition P_{A} betätigt das Schaltglied 5 das Ventilbetätigungsglied 2, so dass das Absperrventil in seine andere Stellung, z.B. seine Offenstellung, geschaltet wird. Um das Ventil erneut zu schalten, betätigt der Benutzer den Bedienstift 7, indem er ihn von seiner zweiten Endposition E₂ in seine erste Endposition E₁ zurückbewegt. Durch entsprechende Symmetrie der Bedienstiftführung 12 und der Übertragungseinheit 8 erfolgt dieser Schaltvorgang äquivalent zum vorigen Schaltvorgang. Dabei bewegt sich das Schaltglied 5 wiederum aus seiner Ausgangsposition P_{A} in seine Schaltposition P_{S} und wieder in seine Ausgangsposition P_{A} zurück und betätigt entsprechend erneut das Ventilbetätigungsglied 2, so dass das Ventil von seiner Offenstellung in seine Schließstellung gelangt.

Wie das gezeigte und die oben erwähnten Ausführungsbeispiele deutlich machen, stellt die Erfindung eine vorteilhafte Schaltvorrichtung zur Verfügung, die sich insbesondere für sanitäre Absperrventile eignet, aber auch für nicht-sanitäre Absperrventile und für sanitäre und nicht-sanitäre Misch- oder Umstellventile.

## Patentansprüche

1. Sanitäres Absperr- oder Umstellventil mit
- einem Ventilgehäusekörper (1),
- einem am Ventilgehäusekörper axialbeweglich angeordneten Ventilbetätigungsglied (2) und
- einer Schaltvorrichtung (3), wobei,
- die Schaltvorrichtung (3) folgendes umfasst:
- einen Schaltgehäusekörper (4),
- ein auf das Ventilbetätigungsglied wirkendes Schaltglied (5),
- eine Federhaltung (18), die das Schaltglied in einer Schaltrichtung (Ts) von einer Ausgangsposition (P_{A}) in eine Schaltposition (Ps) federelastisch translationsbeweglich am Schaltgehäusekörper hält, wobei die Federhalterung von einem Federstreifen (18a) gebildet ist, der mit seinen beiden Enden am Schaltgehäusekörper fixiert ist und in einem mittleren Bereich das Schaltglied trägt, und ein Rückstellelement (6) bereitstellt, welches auf das Schaltglied in der Schaltposition eine Rückstellkraft (F_{R}) in Richtung der Ausgangsposition ausübt,
- einen Bedienstift (7) als Nutzerschnittstelle, der am Schaltgehäusekörper in einer zur Schaltrichtung des Schaltglieds parallelen Kippebene (K_{E}) zwischen zwei Endpositionen (E₁, E₂) kippbeweglich gehalten ist, und
- eine Übertragungseinheit (8) zwischen dem Schaltglied und dem Bedienstift mit einer Kulissenführung (9), welche die Kippbewegung des Bedienstifts in die Translationsbewegung des Schaltglieds umsetzt,
- wobei die Schaltposition des Schaltglieds mit einer Zwischenposition (Z_{B}) des Bedienstifts zwischen seinen beiden Endpositionen korrespondiert.

2. Sanitäres Absperr- oder Umstellventil nach Anspruch 1, wobei die Kulissenführung (9) eine mit dem Bedienstift bewegungsgekoppelte erste Kulissennockenfläche (10a) und eine mit dem Schaltglied bewegungsgekoppelte zweite Kulissennockenfläche (10b) umfasst, die mit der ersten Kulissennockenfläche über eine Schrägflächenkopplung zusammenwirkt.

3. Sanitäres Absperr- oder Umstellventil nach Anspruch 2, wobei die Kulissenführung zwei erste Kulissennockenflächen (10a, 10b) und zwei zweite Kulissennockenflächen (11a, 11b) umfasst und wobei die ersten und zweiten Kulissennockenflächen in einer zur Kippebene senkrechten Richtung (A_{R}) voneinander beabstandet angeordnet sind.

4. Sanitäres Absperr- oder Umstellventil nach einem der Ansprüche 1 bis 3, mit einer Bedienstiftführung (12), die den Bedienstift kippbeweglich am Schaltgehäusekörper führt und eine in der Kippebene kreisbogenförmige Führungsfläche (14a) an einem mit dem Bedienstift bewegungsgekoppelten Schaltführungskörper (13) sowie eine zu der kreisbogenförmigen Führungsfläche korrespondierend kreisbogenförmige Führungsgegenfläche (14b) am Schaltgehäusekörper beinhaltet.

5. Sanitäres Absperr- oder Umstellventil nach Anspruch 4, wobei sich die kreisbogenförmige Führungsfläche am Schaltführungskörper in der Kippebene über einen Bogenwinkel im Bereich zwischen 30° und 70° erstreckt.

6. Sanitäres Absperr- oder Umstellventil nach einem der Ansprüche 1 bis 5, wobei eine Längsachse (L_{B}) des Bedienstifts in allen Stellungen des Bedienstifts zwischen seinen beiden Endpositionen einen Winkel (γ) von höchstens 45° mit der Schaltrichtung des Schaltglieds einschließt.

7. Sanitäres Absperr- oder Umstellventil nach einem der Ansprüche 1 bis 6, wobei der Schaltgehäusekörper eine plattenförmige Bedienseite (4a) mit einer Aussparung (19) aufweist, aus der sich der Bedienstift in allen seinen Stellungen zwischen seinen beiden Endpositionen mit einer Längsachse (L_{B}) heraus erstreckt, die einen Winkel (β) von mindestens 45° mit einer Plattenebene (4p) der Bedienseite einschließt.

## Claims

1. Sanitary shut-off or switch-over valve, comprising
- a valve housing body (1),
- a valve actuating member (2) disposed on the valve housing body for axial movement, and
- a switch-over device (3),
- wherein the switch-over device (3) comprises the following:
a switch-over housing body (4),
- a switch-over member (5) acting on the valve actuating member,
- a spring holding arrangement (18) which retains the switch-over member on the switch-over housing body in a spring-elastic manner capable of translational movement in a switch-over direction (T_{S}) from an initial position (P_{A}) to a switch-over position (P_{S}), wherein the spring holding arrangement is a spring strip (18a) which is fixed on the switch-over housing body with both of its ends and includes the switch-over member in a central region, and provides a return element (6) which exerts a return force (F_{R}) on the switch-over member in the switch-over position in the direction towards the initial position,
- an operating pin (7) as a user interface which is held on the switch-over housing body capable of tilting movement between two end positions (E₁, E₂) in a tilting plane (K_{E}) parallel in relation to the switch-over direction of the switch-over member, and
- a transmission unit (8) between the switch-over member and the operating pin, including a sliding guide mechanism (9) which transfers the tilting movement of the operating pin into the translational movement of the switch-over member,
- wherein the switch-over position of the switch-over member corresponds to an intermediate position (Z_{B}) of the operating pin between the two end positions thereof.

2. Sanitary shut-off or switch-over valve according to claim 1, wherein the sliding guide mechanism (9) comprises a first sliding cam surface (10a), coupled for conjoint movement to the operating pin, and a second sliding cam surface (10b), coupled for conjoint movement to the switch-over member, said second sliding cam surface cooperating with the first sliding cam surface via a bevel coupling.

3. Sanitary shut-off or switch-over valve according to claim 2, wherein the sliding guide mechanism comprises two first sliding cam surfaces (10a, 10b) and two second sliding cam surfaces (11a, 11b), and wherein the first and second sliding cam surfaces are arranged mutually spaced apart in a direction (A_{R}) perpendicular to the tilting plane.

4. Sanitary shut-off or switch-over valve according to any one of claims 1 to 3, comprising an operating pin guidance (12) guiding the operating pin in tilting move on the switch-over housing body and including a circular arc-shaped guiding surface (14a) in the tilting plane on a switch-over guiding body (13) coupled for conjoint movement to the operating pin and a circular arc-shaped guiding counter-surface (14b) on the switch-over housing body corresponding to the circular arc-shaped guiding surface.

5. Sanitary shut-off or switch-over valve according to claim 4, wherein the circular arc-shaped guiding surface on the switch-over guiding body extends in the tilting plane over an angle of the arc in the range between 30° and 70°.

6. Sanitary shut-off or switch-over valve according to any one of claims 1 to 5, wherein a longitudinal axis (L_{B}) of the operating pin encloses an angle (γ) of at most 45° to the switch-over direction of the switch-over member in all positions of the operating pin between the two end positions thereof.

7. Sanitary shut-off or switch-over valve according to any one of claims 1 to 6, wherein the switch-over housing body comprises a plate-shaped operating side (4a) having a recess (19), from which recess the operating pin extends in all of its positions between its two end positions with a longitudinal axis (L_{B}) which encloses an angle (β) of at least 45° to a plate plane (4p) of the operating side.

## Revendications

1. Vanne d'arrêt ou inverseur sanitaire, comprenant :
- un corps de boîtier de vanne (1),
- un organe d'actionnement de vanne (2) disposé de manière déplaçable axialement au niveau du corps de boîtier de vanne et
- un dispositif de commutation (3),
où
- le dispositif de commutation (3) comprend :
- un corps de boîtier de commutation (4),
- un organe de commutation (5) agissant sur l'organe d'actionnement de vanne,
- une fixation à ressort (18) qui retient l'organe de commutation sur le corps de boîtier de commutation de manière déplaçable en translation élastiquement par ressort dans une direction de commutation (Ts) d'une position de départ (P_{A}) à une position de commutation (P_{S}), la fixation à ressort étant formée par une bande élastique (18a) qui est fixée avec ses deux extrémités au corps de boîtier de commutation et qui porte l'organe de commutation dans une région centrale, et qui fournit un élément de rappel (6) qui exerce sur l'organe de commutation, dans la position de commutation, une force de rappel (F_{R}) dans la direction de la position de départ,
- une goupille de commande (7) en tant qu'interface utilisateur, qui est retenue au niveau du corps de boîtier de commutation de manière à pouvoir basculer entre deux positions de fin de course (E₁, E₂) dans un plan de basculement (K_{E}) parallèle à la direction de commutation de l'organe de commutation, et
- une unité de transfert (8) entre l'organe de commutation et la goupille de commande avec un guide à coulisse (9) qui convertit le mouvement de basculement de la goupille de commande en mouvement de translation de l'organe de commutation,
- la position de commutation de l'organe de commutation correspondant à une position intermédiaire (Z_{B}) de la goupille de commande entre ses deux positions de fin de course.

2. Vanne d'arrêt ou inverseur sanitaire selon la revendication 1, le guide à coulisse (9) comprenant une première surface de came de coulisse (10a) accouplée de manière déplaçable à la goupille de commande et une deuxième surface de came de coulisse (10b) accouplée de manière déplaçable à l'organe de commutation, qui coopère avec la première surface de came de coulisse par le biais d'un accouplement à surfaces obliques.

3. Vanne d'arrêt ou inverseur sanitaire selon la revendication 2, le guide à coulisse comprenant deux premières surfaces de came de coulisse (10a, 10b) et deux deuxièmes surfaces de came de coulisse (11a, 11b) et les premières et deuxièmes surfaces de came de coulisse étant disposées à distance les unes des autres dans une direction (A_{R}) perpendiculaire au plan de basculement.

4. Vanne d'arrêt ou inverseur sanitaire selon l'une quelconque des revendications 1 à 3, comprenant un guide de goupille de commande (12) qui guide la goupille de commande de manière basculante au niveau du corps de boîtier de commutation et qui contient une surface de guidage (14a) en forme d'arc de cercle dans le plan de basculement au niveau d'un corps de guidage de commutation (13) accouplé de manière déplaçable à la goupille de commande, ainsi qu'une surface de guidage conjuguée (14b) en forme d'arc de cercle au niveau du corps de boîtier de commutation correspondant à la surface de guidage en forme d'arc de cercle.

5. Vanne d'arrêt ou inverseur sanitaire selon la revendication 4, la surface de guidage en forme d'arc de cercle au niveau du corps de guidage de commutation s'étendant dans le plan de basculement sur un angle d'arc dans une plage comprise entre 30° et 70°.

6. Vanne d'arrêt ou inverseur sanitaire selon l'une quelconque des revendications 1 à 5, un axe longitudinal (L_{B}) de la goupille de commande formant dans toutes les positions de la goupille de commande entre ses deux positions de fin de course un angle (γ) de 45° maximum avec la direction de commutation de l'organe de commutation.

7. Vanne d'arrêt ou inverseur sanitaire selon l'une quelconque des revendications 1 à 6, le corps de boîtier de commutation présentant un côté de commande en forme de plaque (4a) avec un évidement (19) hors duquel la goupille de commande s'étend dans toutes ses positions entre ses deux positions de fin de course, avec un axe longitudinal (L_{B}) qui forme un angle (β) d'au moins 45° avec un plan de plaque (4p) du côté de commande.
